# EUROPEAN PATENT SPECIFICATION

(11) **EP 3 989 325 B1**
(45) Date of publication and mention of the grant of the patent: **04.06.2025**
(21) Application number: 20849081.3
(22) Date of filing: 31.07.2020
(51) Int. Cl.: H01M 10/0568, H01M 10/0525

(54) **LITHIUM-ION BATTERY AND DEVICE**
LITHIUMIONENBATTERIE UND VORRICHTUNG
BATTERIE AU LITHIUM-ION ET DISPOSITIF

(30) Priority: 08.08.2019 CN 201910728961
(43) Date of publication of application: 27.04.2022
(73) Proprietor: Contemporary Amperex Technology (Hong Kong) Limited, Central, Central And Western District (HK)
(72) Inventor: LIANG, Chengdu, Ningde, Fujian 352100 (CN); FU, Chenghua, Ningde, Fujian 352100 (CN); HAN, Changlong, Ningde, Fujian 352100 (CN); CHEN, Peipei, Ningde, Fujian 352100 (CN)
(74) Representative: Kraus & Lederer PartGmbB
(86) International application number: PCT/CN2020/106475
(87) International publication number: WO 2021/023137

(56) References cited:
- CN-A- 102 569 817
- CN-A- 103 003 457
- CN-A- 103 641 751
- CN-A- 104 966 840
- CN-A- 105 789 700
- CN-A- 106 848 325
- CN-A- 109 698 334
- US-A1- 2018 076 483

## Description

This application claims priority to Chinese Patent Application No. 201910728961.7, filed with the Chinese Patent Office on August 08, 2019 and entitled "LITHIUM-ION BATTERY".

### TECHNICAL FIELD

This application relates to the field of battery technologies, and in particular, to a lithium-ion battery and an apparatus.

### BACKGROUND

Lithium-ion batteries are widely applied to electric vehicles and consumer electronic products due to their advantages such as high energy density, high output power, long cycle life, and low environmental pollution. At present, the market requires that lithium-ion batteries not only have the advantages of high power, long cycle life, and long storage life, but also have high energy density.
US 2018/076483 A1 relates to a non-aqueous electrolyte of a lithium-ion battery and a lithium-ion battery, wherein the electrolyte comprises a non-aqueous organic solvent, a lithium salt and an additive.

As lithium-ion batteries develop toward being smaller and lighter, the demand for energy density is increasingly high. At present, in the prior art, to increase energy density of lithium-ion batteries, a commonly adopted solution is that: Active materials in electrodes are compacted as much as possible, so that a battery can accommodate more electrode active materials while its volume occupies an unchanged space, for example, applying increasingly heavier coating on the electrode plates, or designing an increasingly higher group margin of battery cell (filling ratio of jelly roll to cell housing), which leads to a series of problems in lithium-ion batteries such as deterioration of charging power performance and discharge power performance and poor cycle life. Therefore, it is necessary to provide a lithium-ion battery with high energy density, low impedance, good kinetic performance, and high safety factor.

### SUMMARY

In view of the problems in the background, this application is intended to provide a lithium-ion battery and an apparatus. The lithium-ion battery has advantages of high energy density, good cycling performance, and good rate performance. In addition, the lithium-ion battery also has good low-temperature discharge performance and safety performance.

To achieve the above objective, this application provides a lithium-ion battery, where the lithium-ion battery includes a battery housing, an electrolyte, and an electrode assembly. The electrolyte includes a lithium salt and an organic solvent, and the electrode assembly includes a positive electrode plate, a negative electrode plate, and a separator. The positive electrode plate includes a positive electrode current collector and a positive electrode membrane that is disposed on at least one surface of the positive electrode current collector and that includes a positive electrode active material, and the negative electrode plate includes a negative electrode current collector and a negative electrode membrane that is disposed on at least one surface of the negative electrode current collector and that includes a negative electrode active material. The lithium salt includes one or more of compounds represented by formula I, where n is an integer of 1 to 3, Rf₁ and Rf₂ are CₘF₂ₘ₊₁, m is an integer of 0 to 5, Rf₁ and Rf₂ are the same or different, and a group margin of battery cell of the lithium-ion battery ranges from 85% to 95%, wherein the group margin of battery cell is a ratio of an actual internal cross-sectional area to a maximum internal cross-sectional area of the lithium-ion battery.

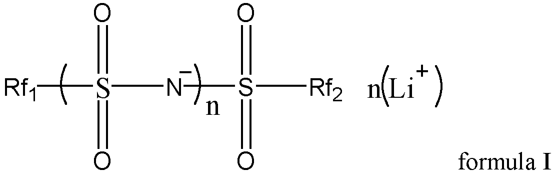

This application includes at least the following beneficial effects:

The lithium-ion battery of this application includes one or more of imine lithium salts represented by formula I, which allows the lithium-ion battery to have advantages of good cycling performance, good rate performance, high safety performance, and good low-temperature discharge performance.

In addition to using the imine lithium salts represented by formula I, the lithium-ion battery of this application also has the advantage of high energy density by adjusting the group margin of battery cell thereof.

The apparatus of this application includes the lithium-ion battery provided in this application, and therefore has at least the same advantages as the lithium-ion battery of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic diagram of an embodiment of a lithium-ion battery;
FIG. 2 is an exploded view of FIG. 1;
FIG. 3 is a schematic diagram of an embodiment of a battery module;
FIG. 4 is a schematic diagram of an embodiment of a battery pack;
FIG. 5 is an exploded view of FIG. 4; and
FIG. 6 is a schematic diagram of an embodiment of an apparatus using a lithium-ion battery as a power source.

### DESCRIPTION OF EMBODIMENTS

The following describes in detail the lithium-ion battery according to this application.

The lithium-ion battery of this application includes a battery housing, an electrolyte, and an electrode assembly. The electrolyte includes a lithium salt and an organic solvent, and the electrode assembly includes a positive electrode plate, a negative electrode plate, and a separator. The positive electrode plate includes a positive electrode current collector and a positive electrode membrane that is disposed on at least one surface of the positive electrode current collector and that includes a positive electrode active material, and the negative electrode plate includes a negative electrode current collector and a negative electrode membrane that is disposed on at least one surface of the negative electrode current collector and that includes a negative electrode active material. The lithium salt includes one or more of compounds represented by formula I, where n is an integer of 1 to 3, Rf₁ and Rf₂ are CₘF₂ₘ₊₁, m is an integer of 0 to 5, Rf₁ and Rf₂ are the same or different, and a group margin of battery cell of the lithium-ion battery ranges from 85% to 95%.

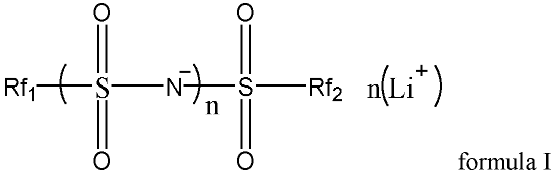

The group margin of battery cell of the lithium-ion battery of this application ranges from 85% to 95%. The group margin of battery cell is a ratio of an actual internal cross-sectional area to a maximum internal cross-sectional area of the lithium-ion battery, also referred to as a filling rate. The group margin of battery cell can characterize the difficulty of fitting the electrode assembly into the housing, the pressure on the battery housing from the electrode assembly that swells because of charging, and the like.

There are two ways to calculate the group margin of battery cell, namely: group margin of battery cell = cross-sectional area of electrode assembly/internal space area of battery housing; and group margin of battery cell = thickness of electrode assembly/internal thickness of battery housing.

A smaller group margin of battery cell of the lithium-ion battery makes the electrode assembly easier to fit into the housing, but the energy density of the lithium-ion battery with a smaller group margin of battery cell is accordingly lower, which may not meet the actual use demand. A larger group margin of battery cell of the lithium-ion battery makes the electrode assembly harder to fit into the housing, which not only increases processing difficulty but also causes damage to the electrode assembly. A lithium-ion battery with a larger group margin of battery cell has a smaller proportion of electrolyte, which affects cycling performance and rate performance of the lithium-ion battery. In addition, in the lithium-ion battery with a larger group margin of battery cell, the electrode assembly that swells because of charging applies greater pressure on the battery housing, which also deteriorates safety performance of the lithium-ion battery. The group margin of battery cell of the lithium-ion battery of this application ranges from 85% to 95%, which allows the lithium-ion battery to have higher energy density without deteriorating the cycling performance, rate performance, and safety performance of the lithium-ion battery.

Currently, for common lithium-ion batteries using a conventional lithium salt lithium hexafluorophosphate (LiPF₆), because LiPF₆ is easily decomposed at high temperatures and extremely sensitive to moisture, LiPF₆ cannot be used in special environments with high energy density, where such lithium-ion batteries typically show problems such as poor rate performance, poor cycling performance, and poor safety performance, difficult to satisfy the actual use demand. In the lithium-ion battery of this application, the electrolyte uses an imine lithium salt represented by formula I, which can significantly improve the cycling performance, rate performance, and safety performance of the lithium-ion battery, and can also improve low-temperature discharge performance of the lithium-ion battery. This is because the imine lithium salt represented by formula I typically has a thermal decomposition temperature higher than 200°C, thus having the advantage of good thermal stability. In addition, the imine lithium salt represented by formula I can still work properly at temperatures lower than -20°C. The imine lithium salt represented by formula I also performs excellently in conducting electricity, with a low binding energy between Li⁺ and imine anions and a high dissociation degree of Li⁺, allowing the electrolyte to have high electrical conductivity. The imine lithium salt represented by formula I also helps to reduce film-forming resistance on surfaces of the positive electrode and negative electrode, and helps to form a stable interface protection film with good ionic conductivity on the surfaces of the positive electrode and negative electrode.

However, if a concentration of the imine lithium salt represented by formula I in the electrolyte is excessively low, the concentration of Li⁺ in the electrolyte is low, and the conductivity of the electrolyte is not significantly improved, and therefore cycling performance and rate performance of the lithium-ion battery are not obviously improved; and if the concentration of the imine lithium salt represented by formula I in the electrolyte is excessively high, viscosity of the electrolyte increases excessively, which is unfavorable for improving the cycling performance and low-temperature discharge performance of the lithium-ion battery. In the lithium-ion battery of this application, the mass of the imine lithium salt represented by formula I is 5% to 25% of the total mass of the electrolyte, and within such range, the cycling performance, rate performance, and low-temperature discharge performance of the lithium-ion battery can all be improved.

In the lithium-ion battery of this application, the compound represented by formula I is selected from one or more of FSO₂N⁻(Li⁺)SO₂F, FSO₂N⁻(Li⁺)SO₂CF₃, CF₃SO₂N⁻(Li⁺)SO₂CF₃, FSO₂N⁻(Li⁺)SO₂N⁻(Li⁺)SO₂F, FSO₂N⁻(Li⁺)SO₂N⁻(Li⁺)SO₂N⁻(Li⁺)SO₂F, FSO₂N⁻(Li⁺)SO₂N⁻(Li⁺)SO₂CF₃, CF₃SO₂N⁻(Li⁺)SO₂N⁻(Li⁺)SO₂CF₃, FSO₂N⁻(Li⁺)SO₂N⁻(Li⁺)SO₂N⁻(Li⁺)SO₂CF₃, and CF₃SO₂N⁻(Li⁺)SO₂N⁻(Li⁺)SO₂N⁻(Li⁺)SO₂CF₃.

In the lithium-ion battery of this application, although the lithium-ion battery itself may have good safety performance, there is still a general problem of nail penetration safety performance, especially for lithium ion batteries with higher energy density. The nail penetration safety performance of the lithium-ion battery is closely associated with performance of the positive electrode current collector. A smaller thickness of the positive electrode current collector makes smaller metal fins resulting from nail penetration on the positive electrode current collector, which is more conducive to improving the nail penetration safety performance of the lithium-ion battery. However, if the thickness of the positive electrode current collector is excessively small, the positive electrode plate is at risk of possible strip breakage in a production process, which causes the production to fail to proceed. Optionally, the thickness of the positive electrode current collector ranges from 5 µm to 20 µm.

In the lithium-ion battery of this application, the elongation at break of the positive electrode current collector also affects the nail penetration safety performance of the lithium-ion battery. Higher elongation at break of the positive electrode current collector makes larger metal fins resulting from nail penetration on the positive electrode current collector, and the imine lithium salt represented by formula I may also cause fins to be larger after corroding the positive electrode current collector, which is not conducive to improving the nail penetration safety performance of the lithium-ion battery. However, if the elongation at break of the positive electrode current collector is excessively low, ductility of the positive electrode current collector is hard to satisfy processing requirements, which is not conducive to the processing and production of positive electrode plates. Optionally, the elongation at break of the positive electrode current collector ranges from 0.8% to 4%.

In the lithium-ion battery of this application, optionally, the positive electrode current collector is selected from aluminum foil. In view that the imine lithium salt represented by formula I causes some corrosion to the aluminum foil, an aluminum oxide layer can be provided on both of two surfaces of the aluminum foil to reduce corrosion action of the imine lithium salt represented by formula I on the aluminum foil. Optionally, a thickness of the aluminum oxide layer ranges from 5 nm to 40 nm.

In the lithium-ion battery of this application, in view that the imine lithium salt represented by formula I corrodes the positive electrode current collector, an appropriate amount of lithium hexafluorophosphate (LiPF₆) may be added into the electrolyte to alleviate corrosive action of the imine lithium salt represented by formula I on the positive electrode current collector. However, the amount of LiPF₆ added should not be excessively large. This is because LiPF₆ easily decomposes at high temperatures to produce gases such as HF. The generated gas not only corrodes the positive electrode active material, but also deteriorates the safety performance of the lithium-ion battery. Optionally, the mass of LiFP₆ is 0% to 10% of the total mass of the electrolyte.

In the lithium-ion battery of this application, coating weight of the positive electrode plate also affects the energy density of the lithium-ion battery. Greater coating weight of the positive electrode plate makes more significant increase in the energy density of the lithium-ion battery. However, excessive coating weight of the positive electrode plate is not conducive to improving the cycling performance and rate performance of the lithium-ion battery. In addition, the coating weight of the positive electrode plate may easily lead to lithium precipitation inside the battery, thereby deteriorating the performance of the lithium-ion battery. Optionally, single-sided coating weight of the positive electrode plate ranges from 0.015 g/cm² to 0.023 g/cm².

In the lithium-ion battery of this application, the positive electrode active material is selected from materials capable of deintercalating and intercalating lithium ions. Specifically, the positive electrode active material may be selected from one or more of lithium cobalt oxides, lithium nickel oxides, lithium manganese oxides, lithium nickel manganese oxides, lithium nickel cobalt manganese oxides, lithium nickel cobalt aluminum oxides, and compounds obtained by adding other transition metals or non-transition metals to such compounds, but this application is not limited to these materials.

In the lithium-ion battery of this application, the positive electrode membrane may further include a conductive agent and a binder, where types and amounts of the conductive agent and the binder are not specifically limited, and may be selected as appropriate to actual needs.

In the lithium-ion battery of this application, the negative electrode plate may include a negative electrode current collector and a negative electrode membrane that is disposed on the negative electrode current collector and that includes a negative electrode active material, and the negative electrode membrane may be disposed on one surface of the negative electrode current collector or disposed on two surfaces of the negative electrode current collector. The negative electrode active material is not specifically limited in type, and may be selected from one or more of graphite, soft carbon, hard carbon, mesocarbon microbead, carbon fiber, carbon nanotube, elemental silicon, silicon-oxygen compound, a silicon-carbon composite, silicon alloy, elemental tin, tin-oxygen compound, and lithium titanate. The negative electrode membrane may further include a conductive agent and a binder, where types and amounts of the conductive agent and the binder are not specifically limited, and may be selected as appropriate to actual needs. The negative electrode current collector is also not specifically limited in type, and may be selected as appropriate to actual needs.

In the lithium-ion battery of this application, the negative electrode plate may alternatively be metallic lithium or lithium alloy.

In the lithium-ion battery of this application, the separator is disposed between the positive electrode plate and the negative electrode plate for separation. The separator is not specifically limited in type, and may be, but is not limited to, any separator materials used in existing batteries, for example, polyethylene, polypropylene, polyvinylidene fluoride, and multilayer composite films thereof.

In the lithium-ion battery in this application, the organic solvent may include one or more of other types of linear carbonates, cyclic carbonates, and carboxylic esters. The linear carbonate, cyclic carbonate, and carboxylic ester are not specifically limited in type, and may be selected as appropriate to actual needs. Optionally, the organic solvent may also include one or more of diethyl carbonate, dipropyl carbonate, ethyl methyl carbonate, methyl propyl carbonate, ethylene propyl carbonate, ethylene carbonate, propylene carbonate, butylene carbonate, γ-butyrolactone, methyl formate, ethyl acetate ester, propyl acetate, methyl propionate, ethyl propionate, methyl propionate, and tetrahydrofuran.

In the lithium-ion battery of this application, optionally, the mass of the cyclic carbonate is less than or equal to 10% of the total mass of the electrolyte. Optionally, the cyclic carbonate may include ethylene carbonate (EC). Ethylene carbonate is easy to oxidize and produces a large amount of gas, which poses a certain threat on the safety of the lithium-ion battery. However, ethylene carbonate has a relatively high dielectric constant. In a conventional LiPF₆ system, reducing the amount of ethylene carbonate has significant effects on electrical conductivity. However, based on the imine lithium salt represented by formula I, because of the weak anion-cation interaction of such lithium salt, the electrolyte can still have good conductivity in the case of a small amount of EC.

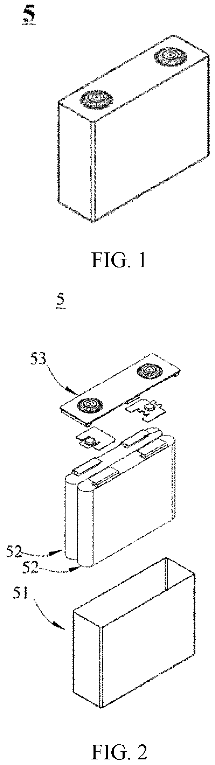

The lithium-ion battery is not particularly limited in shape in this application, which may be of a cylindrical shape, a square shape, or any other shapes. FIG. 1 shows a lithium-ion battery 5 of a square structure as an example.

In some embodiments, the battery housing of the lithium-ion battery may be a soft package, for example, a soft bag. A material of the soft package may be plastic, for example, may include one or more of polypropylene PP, polybutylene terephthalate PBT, polybutylene succinate PBS, and the like. Alternatively, the battery housing of the lithium-ion battery may be a hard shell, for example, a hard plastic shell, or a hard shell made of metal. The hard shell made of metal may be an aluminum shell, a steel shell, or the like. Optionally, the housing of the lithium-ion battery is a hard shell made of metal.

In some embodiments, as shown in FIG. 2, the battery housing may include a housing 51 and a cover plate 53. The housing 51 may include a bottom plate and side plates connected to the bottom plate, and the bottom plate and side plates enclose an accommodating cavity. The housing 51 has an opening communicating with the accommodating cavity, and the cover plate 53 can cover the opening to close the accommodating cavity.

The positive electrode plate, the negative electrode plate, and the separator may be wound or laminated to form an electrode assembly 52. The electrode assembly 52 is encapsulated in the accommodating cavity. The electrolyte infiltrates into the electrode assembly 52.

There may be one or more electrode assemblies 52 included in the lithium-ion battery 5, and their quantity may be adjusted as appropriate to actual needs.

In some embodiments, lithium-ion batteries may be combined to assemble a battery module, and the battery module may include a plurality of lithium-ion batteries. The specific quantity may be adjusted according to the use case and capacity of the battery module.

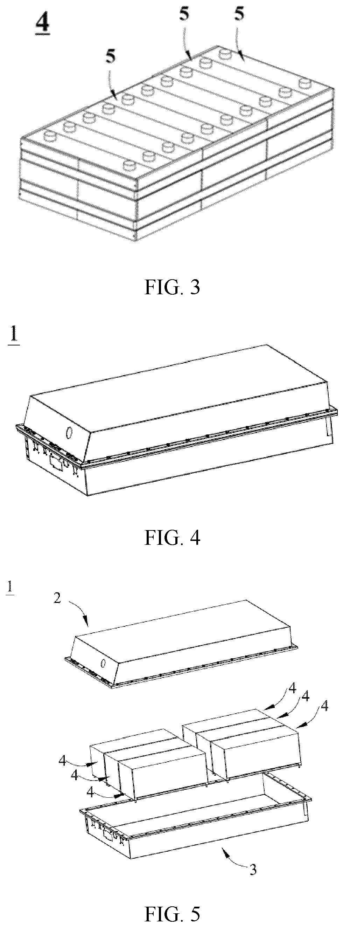

FIG. 3 shows a battery module 4 as an example. Referring to FIG. 3, in the battery module 4, a plurality of lithium-ion batteries 5 may be sequentially arranged in a length direction of the battery module 4. Certainly, the plurality of lithium-ion batteries may be arranged in any other manner. Further, the plurality of lithium-ion batteries 5 may be fixed by using fasteners.

Optionally, the battery module 4 may further include an enclosure with an accommodating space, and the plurality of lithium-ion batteries 5 are accommodated in the accommodating space.

In some embodiments, such battery modules may be further combined to assemble a battery pack, and a quantity of battery modules included in the battery pack may be adjusted based on the use case and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

Among lithium-ion batteries with the same housing dimensions, a lithium-ion battery with greater energy density is more liable to be affected in cycling performance, rate performance, and safety performance. The lithium-ion battery of this application, however, has better cycling performance, rate performance, and safety performance because of the use of the imine lithium salt represented by formula I while the high energy density of a lithium-ion battery is maintained, satisfying the actual use demand. The lithium-ion battery of this application can provide good cycling performance, good rate performance, and good safety performance with a capacity kept not less than 150 Ah.

A third aspect of this application further provides an apparatus, where the apparatus includes the lithium-ion battery provided in this application. The lithium-ion battery may be used as a power source for the apparatus, or may be used as an energy storage unit of the apparatus. The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A lithium-ion battery, a battery module, or a battery pack may be selected for the apparatus according to requirements for using the apparatus.

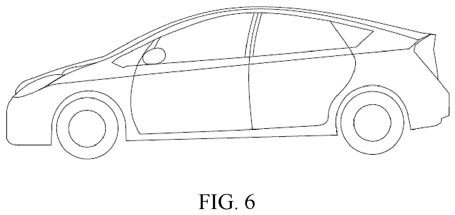

FIG. 6 shows an apparatus as an example. The apparatus is a battery electric vehicle, a hybrid electric vehicle, a plug-in hybrid electric vehicle, or the like. To meet requirements of the apparatus for high power and high energy density of a battery, a battery pack or a battery module may be used.

In another example, the apparatus may be a mobile phone, a tablet computer, a notebook computer, or the like. Such apparatus is generally required to be light and thin, and may use a lithium-ion battery as its power source.

This application is further described with reference to examples. It should be understood that these examples are merely used to describe this application but not to limit the scope of this application.

Lithium-ion batteries of Examples 1 to 28 and Comparative Examples 1 to 9 were all prepared according to the following method.

### (1) Preparation of a positive electrode plate

A positive electrode active material LiNi_{0.5}Mn_{0.3}Co_{0.2}O₂, a conductive agent acetylene black, and a binder polyvinylidene fluoride (PVDF) were fully stirred and uniformly mixed in an N-methylpyrrolidone (NMP) solvent at a weight ratio of 94:3:3 to obtain a positive electrode slurry, and then the positive electrode slurry was uniformly applied onto a positive electrode current collector, followed by drying, cold pressing, and cutting to obtain a positive electrode plate. Parameters of the positive electrode current collector and the coating weight of the positive electrode plate are shown in Table 1.

### (2) Preparation of a negative electrode plate

An active substance artificial graphite, a conductive agent acetylene black, a binder styrene-butadiene rubber (SBR), and a thickener sodium carboxymethyl cellulose (CMC) were uniformly mixed at a weight ratio of 95:2:2:1 in deionized water to obtain a negative electrode slurry, and then the negative electrode slurry was uniformly applied onto a negative electrode current collector copper foil and dried to obtain a negative electrode membrane, and then cold pressing and cutting were performed to obtain a negative electrode plate.

### (3) Preparation of an electrolyte

In an argon atmosphere glove box (H₂O<0.1 ppm, O₂<0.1 ppm), the organic solvents shown in Table 2 were mixed in proportion, and then the fully dried lithium salts shown in Table 2 were dissolved into the organic solvents, to obtain the electrolytes.

### (4) Preparation of a separator

A conventional polypropylene membrane was used as a separator.

### (5) Preparation of a lithium-ion battery

The positive electrode plate, the separator, and the negative electrode plate were laminated in order, so that the separator was interposed between the positive electrode plate and negative electrode plate for separation. Then the laminated product was wound to obtain an electrode assembly. The electrode assembly was placed in a battery housing and dried, and the electrolyte was then injected. Then, after processes including formation and standing, a lithium-ion battery was obtained. The group margin of battery cells of the lithium-ion batteries are shown in Table 3. The group margin of battery cell of the lithium-ion battery was tested in this method: internal thickness of a housing of a square lithium-ion battery was measured and recorded as L1, thickness of the electrode assembly was measured and recorded as L2, and the group margin of battery cell of the lithium-ion battery was L2/L1.

**Table 1 Parameters of positive electrode plates in Examples 1 to 28 and Comparative Examples 1 to 9**

| | Positive electrode current collector | | | Coating weight of positive electrode plate (g/cm²) |
|---|---|---|---|---|
| | Type | Thickness | Elongation at break | |
| Example 1 | Al foil | 8 µm | 2.60% | 0.018 |
| Example 2 | Al foil | 8 µm | 2.60% | 0.018 |
| Example 3 | Al foil | 8 µm | 2.60% | 0.018 |
| Example 4 | Al foil | 8 µm | 2.60% | 0.018 |
| Example 5 | Al foil | 12 µm | 2.60% | 0.018 |
| Example 6 | Al foil | 12 µm | 2.60% | 0.018 |
| Example 7 | Al foil | 12 µm | 2.60% | 0.018 |
| Example 8 | Al foil | 12 µm | 2.60% | 0.018 |
| Example 9 | Al foil | 12 µm | 2.60% | 0.018 |
| Example 10 | Al foil | 12 µm | 2.60% | 0.018 |
| Example 11 | Al foil | 12 µm | 2.60% | 0.018 |
| Example 12 | Al foil | 12 µm | 2.60% | 0.018 |
| Example 13 | Al foil + Al₂O₃ layer | 12 µm + 8 nm | 2.60% | 0.018 |
| Example 14 | Al foil + Al₂O₃ layer | 12 µm + 16 nm | 2.60% | 0.018 |
| Example 15 | Al foil + Al₂O₃ layer | 12 µm + 24 nm | 2.60% | 0.018 |
| Example 16 | Al foil | 12 µm | 0.80% | 0.018 |
| Example 17 | Al foil | 12 µm | 4.00% | 0.018 |
| Example 18 | Al foil | 12 µm | 2.60% | 0.023 |
| Example 19 | Al foil | 12 µm | 2.60% | 0.015 |
| Example 20 | Al foil | 5 µm | 2.60% | 0.018 |
| Example 21 | Al foil | 20 µm | 2.60% | 0.018 |
| Example 22 | Al foil | 12 µm | 2.60% | 0.018 |
| Example 23 | Al foil | 12 µm | 2.60% | 0.018 |
| Example 24 | Al foil | 12 µm | 2.60% | 0.018 |
| Example 25 | Al foil | 12 µm | 2.60% | 0.018 |
| Example 26 | Al foil | 12 µm | 2.60% | 0.018 |
| Example 27 | Al foil | 12 µm | 2.60% | 0.018 |
| Example 28 | Al foil | 12 µm | 2.60% | 0.018 |
| Comparative Example 1 | Al foil | 8 µm | 2.60% | 0.018 |
| Comparative Example 2 | Al foil | 12 µm | 2.60% | 0.018 |
| Comparative Example 3 | Al foil | 12 µm | 2.60% | 0.018 |
| Comparative Example 4 | Al foil | 12 µm | 0.60% | 0.018 |
| Comparative Example 5 | Al foil | 12 µm | 5% | 0.018 |
| Comparative Example 6 | Al foil | 4 µm | 2.60% | 0.018 |
| Comparative Example 7 | Al foil | 25 µm | 2.60% | 0.018 |
| Comparative Example 8 | Al foil | 8 µm | 2.60% | 0.018 |
| Comparative Example 9 | Al foil | 8 µm | 2.60% | 0.018 |

**Table 2 Parameters of electrolytes in Examples 1 to 28 and Comparative Examples 1 to 9**

| | Lithium salt | | | | Organic solvent (mass ratio) |
|---|---|---|---|---|---|
| | Compound represented by formula I | Percentage | Other types of lithium salt | Percentage | |
| Example 1 | LiFSI | 5% | LiPF₆ | 2% | EC:EMC=3:7 |
| Example 2 | LiFSI | 12% | LiPF₆ | 2% | EC:EMC=3:7 |
| Example 3 | LiFSI | 25% | LiPF₆ | 2% | EC:EMC=3:7 |
| Example 4 | LiFSI | 5% | LiPF₆ | 5% | EC:EMC=3:7 |
| Example 5 | LiFSI | 12% | LiPF₆ | 2% | EC:EMC=3:7 |
| Example 6 | LiFSI | 12% | LiPF₆ | 2% | EC:EMC=3:7 |
| Example 7 | LiFSI | 12% | LiPF₆ | 2% | EC:EMC=3:7 |
| Example 8 | LiFSI | 12% | LiPF₆ | 2% | EC:EMC=3:7 |
| Example 9 | LiFSI | 12% | LiPF₆ | 2% | EC:EMC=3:7 |
| Example 10 | LiFSI | 12% | LiPF₆ | 2% | EC:EMC=1:5 |
| Example 11 | LiFSI | 12% | LiPF₆ | 2% | EC:EMC=1:10 |
| Example 12 | LiFSI | 12% | LiPF₆ | 2% | EC:EMC=1:20 AM |
| Example 13 | LiFSI | 12% | LiPF₆ | 2% | EC:EMC=3:7 |
| Example 14 | LiFSI | 12% | LiPF₆ | 2% | EC:EMC=3:7 |
| Example 15 | LiFSI | 12% | LiPF₆ | 2% | EC:EMC=3:7 |
| Example 16 | LiFSI | 12% | LiPF₆ | 2% | EC:EMC=3:7 |
| Example 17 | LiFSI | 12% | LiPF₆ | 2% | EC:EMC=3:7 |
| Example 18 | LiFSI | 12% | LiPF₆ | 2% | EC:EMC=3:7 |
| Example 19 | LiFSI | 12% | LiPF₆ | 2% | EC:EMC=3:7 |
| Example 20 | LiFSI | 12% | LiPF₆ | 2% | EC:EMC=3:7 |
| Example 21 | LiFSI | 12% | LiPF₆ | 2% | EC:EMC=3:7 |
| Example 22 | FSO₂N⁻(Li⁺)SO₂CF₃ | 12% | LiPF₆ | 2% | EC:EMC=3:7 |
| Example 23 | CF₃SO₂N⁻(Li⁺)SO₂CF₃ | 12% | LiPF₆ | 2% | EC:EMC=3:7 |
| Example 24 | FSO₂N⁻(Li⁺)SO₂N⁻(Li⁺)SO₂F | 12% | LiPF₆ | 2% | EC:EMC=3:7 |
| Example 25 | FSO₂N-(Li+)SO₂ N-(Li+)SO₂N-(Li+)SO₂F | 12% | LiPF₆ | 2% | EC:EMC=3:7 |
| Example 26 | FSO₂N⁻(Li⁺)SO₂N⁻(Li⁺)SO₂CF₃ | 12% | LiPF₆ | 2% | EC:EMC=3:7 |
| Example 28 | CF₃SO₂N⁻(Li⁺)SO₂N⁻(Li⁺)SO₂CF₃ | 12% | LiPF₆ | 2% | EC:EMC=3:7 |
| Example 28 | FSO₂N⁻(Li⁺)SO₂N⁻(Li⁺)SO₂N⁻(Li⁺)SO₂CF₃ | 12% | LiPF₆ | 2% | EC:EMC=3:7 |
| Comparative Example 1 | / | / | LiPF₆ | 12% | EC:DEC=3:7 |
| Comparative Example 2 | / | / | LiPF₆ | 12% | EC:EMC=1:10 |
| Comparative Example 3 | / | / | LiPF₆ | 12% | EC:EMC=1:20 |
| Comparative Example 4 | LiFSI | 12% | LiPF₆ | 2% | EC:EMC=3:7 |
| Comparative Example 5 | LiFSI | 12% | LiPF₆ | 2% | EC:EMC=3:7 |
| Comparative Example 6 | LiFSI | 12% | LiPF₆ | 2% | EC:EMC=3:7 |
| Comparative Example 7 | LiFSI | 12% | LiPF₆ | 2% | EC:EMC=3:7 |
| Comparative Example 8 | LiFSI | 12% | LiPF₆ | 2% | EC:EMC=3:7 |
| Comparative Example 9 | LiFSI | 12% | LiPF₆ | 2% | EC:EMC=3:7 |

Next, a test procedure for the lithium-ion battery is as follows:

### (1) Rate performance test for the lithium-ion battery

At 25°C, the lithium-ion battery was charged to 4.3 V at a constant current of 0.5C, and then charged to a current less than 0.05C at a constant voltage of 4.3 V; and the lithium-ion battery was then discharged to 2.8 V at a constant current of 0.5C to obtain a discharge capacity at 0.5C.

At 25°C, the lithium-ion battery was charged to 4.3 V at a constant current of 0.5C, and then charged to a current less than 0.05C at a constant voltage of 4.3 V; and the lithium-ion battery was then discharged to 2.8 V at a constant current of 2C to obtain a discharge capacity at 2C. Lithium-ion battery 2C/0.5C rate performance (%) = (discharge capacity at 2C/discharge capacity at 0.5C) × 100%.

### (2) Cycling performance test for the lithium-ion battery

At 25°C, the lithium-ion battery was charged to 4.3 V at a constant current of 1C, and then charged to a current less than 0.05C at a constant voltage of 4.3 V; and the lithium-ion battery was then discharged to 2.8 V at a constant current of 1C. This was one charge/discharge cycle. The charging and discharging were repeated in this way, and the capacity retention rate of the lithium-ion battery after 1000 cycles was calculated. Capacity retention rate of lithium-ion battery after 1000 cycles at 25°C (%) = (discharge capacity at the 1000th cycle/discharge capacity at the 1st cycle) × 100%.

### (3) Test of hot box safety performance for the lithium-ion battery

At 25°C, the lithium-ion battery was charged to 4.3 V at a constant current of 1C, and then charged to a current less than 0.05C at a constant voltage of 4.3 V, and the charging was stopped. The lithium-ion battery was placed in a hot box, and then the hot box was heated up from 25°C to 150°C at a heating rate of 5°C/min. After reaching 150°C, the temperature remained unchanged, and then timing was started and lasted until the surface of the lithium-ion battery started to smoke.

### (4) Test of low-temperature discharge performance for the lithium-ion battery

At 25°C, the lithium-ion battery was charged to 4.3 V at a constant current of 1C, and then charged to a current less than 0.05C at a constant voltage of 4.3 V; and the lithium-ion battery was then discharged to 2.8 V at a constant current of 1C. A discharge capacity of the lithium-ion battery was measured and recorded as an initial discharge capacity.

At 25°C, the lithium-ion battery was charged to 4.3 V at a constant current of 1C, and then charged to a current less than 0.05C at a constant voltage of 4.3 V. The lithium-ion battery was then placed in a low temperature box at -20°C and taken out after 120 minutes, and then discharged to 2.8 V at a constant current of 1C. A discharge capacity of the lithium-ion battery after the low-temperature storage was recorded. Capacity ratio of lithium-ion battery after low-temperature discharge (%) = (discharge capacity of lithium-ion battery after low-temperature storage/initial discharge capacity of lithium-ion battery at 25°C) × 100%

### (5) Test of nail penetration safety performance for the lithium-ion battery

At 25°C, the lithium-ion battery was charged to 4.3 V at a constant current of 1C, and then charged to a current less than 0.05C at a constant voltage of 4.3 V. At that point, the lithium-ion battery was in a fully charged state. A nail with a diameter of 3 mm was used for a nail penetration test on the lithium-ion battery at a speed of 150 mm/s. The lithium-ion battery was observed for smoke, fire, or explosion. If none were found, the lithium-ion battery was considered to have passed the nail penetration test.

**Table 3 Performance test results of Examples 1 to 28 and Comparative Examples 1 to 9**

| | Group margin of battery cell | 0.5C discharge capacity of battery (Ah) | 2C/0.5C rate performance | Capacity ratio at -10°C discharge | Capacity retention rate after 1000 cycles | 150°C hot box timing (min) | Nail penetration test pass rate |
|---|---|---|---|---|---|---|---|
| Example 1 | 90% | 148 | 62% | 65% | 85% | 68 | 90% |
| Example 2 | 90% | 154 | 89% | 92% | 92% | 75 | 85% |
| Example 3 | 90% | 154 | 76% | 78% | 89% | 75 | 85% |
| Example 4 | 90% | 149 | 80% | 83% | 92% | 62 | 85% |
| Example 5 | 85% | 141 | 89% | 92% | 93% | 75 | 85% |
| Example 6 | 88% | 146 | 89% | 92% | 92% | 75 | 85% |
| Example 7 | 92% | 153 | 85% | 86% | 86% | 75 | 85% |
| Example 8 | 95% | 158 | 80% | 81% | 83% | 75 | 85% |
| Example 9 | 90% | 150 | 89% | 92% | 92% | 75 | 85% |
| Example 10 | 90% | 149 | 87% | 92% | 91% | 92 | 85% |
| Example 11 | 90% | 148 | 83% | 91% | 90% | 114 | 85% |
| Example 12 | 90% | 147 | 79% | 90% | 89% | 125 | 85% |
| Example 13 | 90% | 150 | 87% | 90% | 93% | 76 | 85% |
| Example 14 | 90% | 149 | 85% | 88% | 92% | 78 | 85% |
| Example 15 | 90% | 149 | 83% | 86% | 92% | 81 | 85% |
| Example 16 | 90% | 150 | 89% | 92% | 92% | 75 | 98% |
| Example 17 | 90% | 150 | 89% | 92% | 92% | 75 | 70% |
| Example 18 | 90% | 158 | 81% | 82% | 89% | 75 | 85% |
| Example 19 | 90% | 145 | 92% | 94% | 94% | 75 | 85% |
| Example 20 | 90% | 159 | 89% | 92% | 92% | 75 | 97% |
| Example 21 | 90% | 140 | 89% | 92% | 92% | 75 | 80% |
| Example 22 | 90% | 150 | 88% | 91% | 92% | 75 | 85% |
| Example 23 | 90% | 150 | 88% | 91% | 92% | 75 | 85% |
| Example 24 | 90% | 150 | 88% | 91% | 92% | 75 | 85% |
| Example 25 | 90% | 150 | 87% | 90% | 91% | 75 | 85% |
| Example 26 | 90% | 150 | 87% | 90% | 91% | 75 | 85% |
| Example 27 | 90% | 150 | 86% | 89% | 90% | 75 | 85% |
| Example 28 | 90% | 150 | 86% | 89% | 90% | 75 | 85% |
| Comparative Example 1 | 90% | 150 | 73% | 75% | 82% | 32 | 85% |
| Comparative Example 2 | 90% | 142 | 62% | 64% | 75% | 45 | 85% |
| Comparative Example 3 | 90% | 131 | 32% | 35% | 69% | 52 | 85% |
| Comparative Example 4 | 90% | | / | / | | / | Strip breakage, normal production failed |
| Comparative Example 5 | 90% | 150 | 89% | 92% | 92% | 75 | 40% |
| Comparative Example 6 | 90% | / | / | / | / | | Strip breakage, normal production failed |
| Comparative Example 7 | 90% | 130 | 89% | 92% | 92% | 75 | 50% |
| Comparative Example 8 | 83% | 135 | 90% | 92% | 92% | 75 | 85% |
| Comparative Example 9 | 98% | 159 | 43% | 56% | 64% | 75 | 85% |

Analysis of the test results in Table 2 show that the electrolyte of the lithium-ion batteries in Examples 1 to 28 all included an imine lithium salt, and the percentages of the imine lithium salt in the electrolytes of the lithium-ion batteries in Examples 1 to 28 were moderate. In this case, the lithium-ion batteries had advantages of good cycling performance, good rate performance, high safety performance, and good low-temperature discharge performance. In addition, the group margin of battery cells of the lithium-ion batteries were set within an appropriate range, allowing the lithium-ion batteries to also have high energy density.

In Comparative Examples 1 to 3, only the conventional lithium salt LiPF₆ was used, and the cycling performance, rate performance, safety performance, and low-temperature discharge performance of those lithium-ion batteries were all poor.

The elongation at break of the positive electrode current collector of the lithium-ion battery in Comparative Example 4 was excessively low, which caused the positive electrode plate to be broken in the production process, and thus the production could not proceed properly.

The elongation at break of the positive electrode current collector of the lithium-ion battery in Comparative Example 5 was excessively high. Although the cycling performance, rate performance, and low-temperature discharge performance of the lithium-ion battery could all be improved to some extent, the excessively high elongation at break of the positive electrode current collector led to a lower nail penetration test pass rate of the lithium-ion battery, subjecting the lithium-ion battery to greater safety hazards.

The thickness of the positive electrode current collector of the lithium-ion battery in Comparative Example 6 was excessively small, which also caused the positive electrode plate to be broken in the production process, and thus the production could not proceed properly.

The thickness of the positive electrode current collector of the lithium-ion battery in Comparative Example 7 was excessively large. Similarly, although the cycling performance, rate performance, and low-temperature discharge performance of the lithium-ion battery could all be improved to some extent, the excessively large thickness of the positive electrode current collector led to a lower nail penetration test pass rate of the lithium-ion battery, subjecting the lithium-ion battery to greater safety hazards.

The lithium-ion battery in Comparative Example 8 was designed with an excessively low group margin of battery cell, and the 0.5C discharge capacity of the lithium-ion battery was relatively low, difficult to satisfy the actual use demand of the lithium-ion battery.

The lithium-ion battery in Comparative Example 9 was designed with an excessively high group margin of battery cell. Although the 0.5C discharge capacity of the lithium-ion battery could be improved, the rate performance, low-temperature discharge performance, and cycling performance of the lithium-ion battery were all poor.

According to the disclosure and teaching of this specification, a person skilled in the art may make further changes or modifications to the foregoing embodiments. Therefore, this application is not limited to the specific embodiments disclosed and described above. Some changes and modifications to this application shall also fall within the protection scope of the claims of this application. In addition, although certain terms are used in the specification, these terms are merely used for ease of description and do not constitute any limitation on this application.

## Claims

1. A lithium-ion battery (5), comprising:
a battery housing (51);
an electrolyte, comprising a lithium salt and an organic solvent; and
an electrode assembly (52), comprising a positive electrode plate, a negative electrode plate, and a separator; wherein
the positive electrode plate comprises a positive electrode current collector and a positive electrode membrane that is disposed on at least one surface of the positive electrode current collector and that comprises a positive electrode active material, and the negative electrode plate comprises a negative electrode current collector and a negative electrode membrane that is disposed on at least one surface of the negative electrode current collector and that comprises a negative electrode active material;
wherein
the lithium salt comprises one or more of compounds represented by formula I; 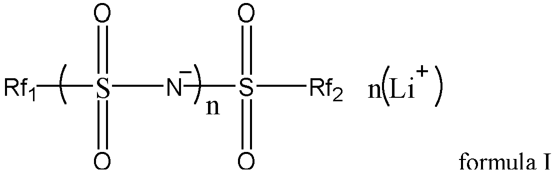
wherein n is an integer of 1 to 3;
Rf₁ and Rf₂ are CₘF₂ₘ₊₁, wherein m is an integer of 0 to 5, and Rf₁ and Rf₂ are the same or different;
the mass of the compound represented by formula I is 5% to 25% of the total mass of the electrolyte; and
a group margin of battery cell of the lithium-ion battery (5) ranges from 85% to 95%, wherein the group margin of battery cell is a ratio of an actual internal cross-sectional area to a maximum internal cross-sectional area of the lithium-ion battery, and the group margin is determined according to the present description.

2. The lithium-ion battery (5) according to claim 1, wherein the compound represented by formula I is selected from one or more of FSO₂N⁻(Li⁺)SO₂F, FSO₂N⁻(Li⁺)SO₂CF₃, CF₃SO₂N⁻ (Li⁺)SO₂CF₃, FSO₂N⁻(Li⁺)SO₂N⁻(Li⁺)SO₂F, FSO₂N⁻(Li⁺)SO₂N⁻(Li⁺)SO₂N⁻(Li⁺)SO₂F, FSO₂N⁻ (Li⁺)SO₂N⁻(Li⁺)SO₂CF₃, CF₃SO₂N⁻(Li⁺)SO₂N⁻(Li⁺)SO₂CF₃, FSO₂N⁻(Li⁺)SO₂N⁻(Li⁺)SO₂N⁻ (Li⁺)SO₂CF₃, and CF₃SO₂N⁻(Li⁺)SO₂N⁻(Li⁺)SO₂N⁻(Li⁺)SO₂CF₃.

3. The lithium-ion battery (5) according to claim 1 or 2, wherein the thickness of the positive electrode current collector ranges from 5 µm to 20 µm.

4. The lithium-ion battery (5) according to any one of claims 1 to 3, wherein the elongation at break of the positive electrode current collector ranges from 0.8% to 4%.

5. The lithium-ion battery (5) according to any one of claims 1 to 4, wherein the positive electrode current collector is selected from aluminum foil.

6. The lithium-ion battery (5) according to claim 5, wherein an aluminum oxide layer is disposed on both of two surfaces of the aluminum foil.

7. The lithium-ion battery (5) according to claim 6, wherein the thickness of the aluminum oxide layer ranges from 5 nm to 40 nm.

8. The lithium-ion battery (5) according to any one of claims 1 to 7, wherein single-sided coating weight of the positive electrode plate ranges from 0.015 g/cm² to 0.023 g/cm².

9. The lithium-ion battery (5) according to any one of claims 1 to 8, wherein compacted density of the positive electrode plate ranges from 2.0 g/cm³ to 3.5 g/cm³.

10. The lithium-ion battery (5) according to any one of claims 1 to 9, wherein the mass of lithium hexafluorophosphate in the electrolyte is 0% to 10% of the total mass of the electrolyte.

11. The lithium-ion battery (5) according to any one of claims 1 to 10, wherein the organic solvent comprises a cyclic carbonate, and the mass of the cyclic carbonate is less than or equal to 10% of the total mass of the electrolyte.

12. An apparatus, wherein a driving source or storage source of the apparatus is the lithium-ion battery (5) according to any one of claims 1 to 11.

## Patentansprüche

1. Lithium-Ionen-Batterie (5), umfassend:
ein Batteriegehäuse (51);
einen Elektrolyten, der ein Lithiumsalz und ein organisches Lösungsmittel umfasst; und
eine Elektrodenanordnung (52), umfassend eine positive Elektrodenplatte, eine negative Elektrodenplatte und einen Separator; wobei
die positive Elektrodenplatte einen positiven Elektrodenstromkollektor und eine positive Elektrodenmembran umfasst, die auf mindestens einer Oberfläche des positiven Elektrodenstromkollektors angeordnet ist und die ein positives elektrodenaktives Material umfasst, und die negative Elektrodenplatte einen negativen Elektrodenstromkollektor und eine negative Elektrodenmembran umfasst, die auf mindestens einer Oberfläche des negativen Elektrodenstromkollektors angeordnet ist und die ein negatives elektrodenaktives Material umfasst;
wobei
das Lithiumsalz eine oder mehrere der durch die Formel I dargestellten Verbindungen umfasst; 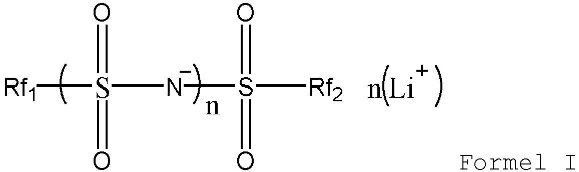
wobei n eine ganze Zahl von 1 bis 3 ist;
Rf₁ und Rf₂ CₘF₂ₘ₊₁ sind, worin m eine ganze Zahl von 0 bis 5 ist, und Rf₁ und Rf₂ gleich oder verschieden sind;
die Masse der durch Formel I dargestellten Verbindung 5 % bis 25 % der Gesamtmasse des Elektrolyten beträgt; und
eine Gruppenspanne der Batteriezelle der Lithium-Ionen-Batterie (5) im Bereich von 85% bis 95% liegt, wobei die Gruppenspanne der Batteriezelle ein Verhältnis einer tatsächlichen inneren Querschnittsfläche zu einer maximalen inneren Querschnittsfläche der Lithium-Ionen-Batterie ist, und die Gruppenspanne gemäß der vorliegenden Beschreibung bestimmt wird.

2. Lithium-Ionen-Batterie (5) nach Anspruch 1, wobei die durch die Formel I dargestellte Verbindung ausgewählt ist aus einer oder mehreren von FSO₂N⁻(Li⁺)SO₂F, FSO₂N⁻ (Li⁺)SO₂CF₃, CF₃SO₂N⁻(Li⁺)SO₂CF₃, FSO₂N⁻(Li⁺)SO₂N⁻(Li⁺)SO₂F, FSO₂N⁻(Li⁺)SO₂N⁻(Li⁺)SO₂N⁻(Li⁺)SO₂F, FSO₂N⁻(Li⁺)SO₂N⁻ (Li⁺)SO₂CF₃, CF₃SO₂N⁻(Li⁺)SO₂N⁻(Li⁺)SO₂CF₃, FSO₂N⁻(Li⁺)SO₂N⁻ (Li⁺)SO₂N⁻(Li⁺)SO₂CF₃, und CF₃SO₂N⁻(Li⁺)SO₂N⁻(Li⁺)SO₂N⁻ (Li⁺)SO₂CF₃.

3. Lithium-Ionen-Batterie (5) nach Anspruch 1 oder 2, wobei die Dicke des positiven Elektrodenstromkollektors zwischen 5 µm und 20 µm liegt.

4. Lithium-Ionen-Batterie (5) nach einem der Ansprüche 1 bis 3, wobei die Bruchdehnung des positiven Elektrodenstromkollektors im Bereich von 0,8% bis 4% liegt.

5. Lithium-Ionen-Batterie (5) nach einem der Ansprüche 1 bis 4, wobei der positive Elektrodenstromkollektor aus Aluminiumfolie ausgewählt ist.

6. Lithium-Ionen-Batterie (5) nach Anspruch 5, wobei eine Aluminiumoxidschicht auf beiden Oberflächen der Aluminiumfolie angeordnet ist.

7. Lithium-Ionen-Batterie (5) nach Anspruch 6, wobei die Dicke der Aluminiumoxidschicht zwischen 5 nm und 40 nm liegt.

8. Lithium-Ionen-Batterie (5) nach einem der Ansprüche 1 bis 7, wobei das Gewicht der einseitigen Beschichtung der positiven Elektrodenplatte zwischen 0,015 g/cm² und 0,023 g/cm² liegt.

9. Lithium-Ionen-Batterie (5) nach einem der Ansprüche 1 bis 8, wobei die verdichtete Dichte der positiven Elektrodenplatte im Bereich von 2,0 g/cm³ bis 3,5 g/cm³ liegt.

10. Lithium-Ionen-Batterie (5) nach einem der Ansprüche 1 bis 9, wobei die Masse des Lithiumhexafluorophosphats im Elektrolyten 0 % bis 10 % der Gesamtmasse des Elektrolyten beträgt.

11. Lithium-Ionen-Batterie (5) nach einem der Ansprüche 1 bis 10, wobei das organische Lösungsmittel ein cyklisches Carbonat umfasst und die Masse des cyklischen Carbonats weniger als oder gleich 10 % der Gesamtmasse des Elektrolyten beträgt.

12. Gerät, wobei eine Antriebsquelle oder Speicherquelle des Geräts die Lithium-Ionen-Batterie (5) nach einem der Ansprüche 1 bis 11 ist.

## Revendications

1. Batterie lithium-ion (5), comprenant :
un boîtier de batterie (51) ;
un électrolyte, comprenant un sel de lithium et un solvant organique ; et
un assemblage d'électrodes (52), comprenant une plaque d'électrode positive, une plaque d'électrode négative et un séparateur ; dans laquelle
la plaque d'électrode positive comprend un collecteur de courant d'électrode positive et une membrane d'électrode positive disposée sur au moins une surface du collecteur de courant d'électrode positive et comprenant un matériau actif d'électrode positive, et la plaque d'électrode négative comprend un collecteur de courant d'électrode négative et une membrane d'électrode négative disposée sur au moins une surface du collecteur de courant d'électrode négative et comprenant un matériau actif d'électrode négative ;
dans laquelle
le sel de lithium comprend un ou plusieurs composés représentés par la formule I ; 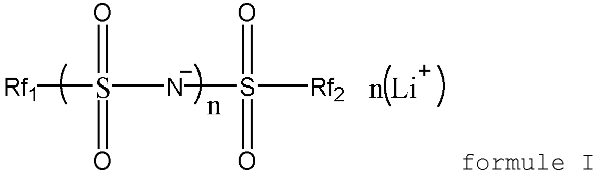
où n est un nombre entier de 1 à 3 ;
Rf₁ et Rf₂ sont CₘF₂ₘ₊₁, où m est un nombre entier de 0 à 5, et Rf₁ et Rf₂ sont identiques ou différents ;
la masse du composé représenté par la formule I est de 5 % à 25 % de la masse totale de l'électrolyte ; et
une marge de groupe de l'élément de batterie de la batterie lithium-ion (5) est comprise entre 85 % et 95 %, la marge de groupe de l'élément de batterie étant un rapport entre une surface de section transversale interne réelle et une surface de section transversale interne maximale de la batterie lithium-ion, et la marge de groupe étant déterminée conformément à la présente description.

2. Batterie lithium-ion (5) selon la revendication 1, dans laquelle le composé représenté par la formule I est choisi parmi un ou plusieurs des composés suivants : FSO₂N⁻(Li⁺)SO₂F, FSO₂N⁻(Li⁺)SO₂CF₃, CF₃SO₂N⁻(Li⁺)SO₂CF₃, FSO₂N⁻(Li⁺)SO₂N⁻(Li⁺)SO₂F, FSO₂N⁻(Li⁺)SO₂N⁻(Li⁺)SO₂N⁻ (Li⁺)SO₂F, FSO₂N⁻(Li⁺)SO₂N⁻(Li⁺)SO₂CF₃, CF₃SO₂N⁻(Li⁺)SO₂N⁻ (Li⁺)SO₂CF₃, FSO₂N⁻(Li⁺)SO₂N⁻(Li⁺)SO₂N⁻(Li⁺)SO₂CF₃, et CF₃SO₂N⁻(Li⁺)SO₂N⁻(Li⁺)SO₂N⁻(Li⁺)SO₂CF₃.

3. Batterie lithium-ion (5) selon la revendication 1 ou 2, dans laquelle l'épaisseur du collecteur de courant de l'électrode positive est comprise entre 5 µm et 20 µm.

4. Batterie lithium-ion (5) selon l'une des revendications 1 à 3, dans laquelle l'allongement à la rupture du collecteur de courant de l'électrode positive est compris entre 0,8 % et 4 %.

5. Batterie lithium-ion (5) selon l'une des revendications 1 à 4, dans laquelle le collecteur de courant de l'électrode positive est choisi parmi les feuilles d'aluminium.

6. Batterie lithium-ion (5) selon la revendication 5, dans laquelle une couche d'oxyde d'aluminium est disposée sur les deux surfaces de la feuille d'aluminium.

7. Batterie lithium-ion (5) selon la revendication 6, dans laquelle l'épaisseur de la couche d'oxyde d'aluminium est comprise entre 5 nm et 40 nm.

8. Batterie lithium-ion (5) selon l'une des revendications 1 à 7, dans laquelle le poids du revêtement simple face de la plaque d'électrode positive est compris entre 0,015 g/cm² et 0,023 g/cm².

9. Batterie lithium-ion (5) selon l'une des revendications 1 à 8, dans laquelle la densité compacte de la plaque d'électrode positive est comprise entre 2,0 g/cm³ et 3,5 g/cm³.

10. Batterie lithium-ion (5) selon l'une des revendications 1 à 9, dans laquelle la masse d'hexafluorophosphate de lithium dans l'électrolyte est comprise entre 0 et 10 % de la masse totale de l'électrolyte.

11. Batterie lithium-ion (5) selon l'une des revendications 1 à 10, dans laquelle le solvant organique comprend un carbonate cyclique, et la masse du carbonate cyclique est inférieure ou égale à 10 % de la masse totale de l'électrolyte.

12. Appareil, dans lequel une source d'entraînement ou de stockage de l'appareil est la batterie lithium-ion (5) selon l'une des revendications 1 à 11.
